# EUROPÄISCHE PATENTSCHRIFT

(11) **EP 1 920 962 B1**
(45) Veröffentlichungstag und Bekanntmachung des Hinweises auf die Patenterteilung: **27.06.2012**
(21) Anmeldenummer: 07021144.6
(22) Anmeldetag: 30.10.2007
(51) Int. Cl.: B60J 7/185

(54) **Verdeck für ein Kraftfahrzeug, insbesondere Cabriolet-Fahrzeug, mit einem faltbaren Dach**
Cover for a motor vehicle, in particular a convertible vehicle, with a foldable roof
Capote pour un véhicule automobile, en particulier pour un véhicule de type cabriolet, avec un toit pliant

(30) Priorität: 08.11.2006 DE 102006052596
(43) Veröffentlichungstag der Anmeldung: 14.05.2008
(73) Patentinhaber: Wilhelm Karmann GmbH, 49084 Osnabrück (DE)
(72) Erfinder: Habacker, Norbert, 49565 Bramsche (DE)
(74) Vertreter: Kronthaler, Schmidt & Coll.

(56) Entgegenhaltungen:
- EP-A- 0 763 439
- DE-A1- 3 709 927
- DE-A1- 10 313 496
- DE-A1-102005 004 017

## Beschreibung

Die Erfindung betrifft ein Verdeck für ein Kraftfahrzeug, insbesondere Cabriolet-Fahrzeug, mit einem faltbaren Dach, welches mittels eines Verdeckgestänges zwischen einer Schließstellung, in der es an einem Windschutzscheibenrahmen festlegbar ist, und einer Öffnungsstellung, in der es in einer heckseitigen Ablageposition abgelegt ist, verlagerbar ist, nach der im Oberbegriff des Patentanspruches 1 näher definierten Art.

Aus der Praxis bekannte Verdecke für Cabriolet-Fahrzeuge weisen in der Regel eine Verriegelungsvorrichtung an der Dachspitze auf, welche zum Festlegen des Daches in geschlossenem Verdeckzustand an einem Windschutzscheibenrahmen dient. Zur Arretierung des Verdecks in geöffnetem Zustand ist üblicherweise eine separate Arretiervorrichtung am Fahrzeugaufbau vorgesehen, mit der das als Paket abgelegte Verdeck gehalten wird. Der apparative und sensorische Aufwand ist dabei erheblich.

Ein Verdeck der eingangs genannten Art ist aus der
EP 0 763 439 B1 bekannt. Das insbesondere für ein Cabriolet-Fahrzeug vorgesehene Verdeck wird in seiner Schließstellung mittels einer Verriegelungsvorrichtung an einem angrenzenden Windschutzscheibenrahmen in Lage gehalten und ist nach Lösen der Verriegelungsvorrichtung in eine heckseitige Ablagestellung verlagerbar, wobei die Verriegelungsvorrichtung ein an einem vorderen Verdeckabschnitt angeordnetes Verriegelungsorgan mit einem Verschlusshaken umfasst. In seiner zurückgeklappten heckseitigen Ablagestellung wird das Verdeck mittels einer Arretiereinrichtung fixiert, wobei das am vorderen Verdeckabschnitt angeordnete Verriegelungsorgan mit dem Verschlusshaken zugleich ein Funktionsteil der heckseitigen Arretiereinrichtung bildet.

Nachteilhafterweise ist die Verwendung eines derartigen Verdecks mit einer Verriegelungsvorrichtung mit einem Verschlusshaken, welcher sowohl ein Funktionsteil bei der Festlegung des Verdecks in einer Schließstellung als auch bei einer Festlegung des Verdecks in einer Öffnungsstellung bildet, schwer an die jeweils vorliegenden in diesem Bereich sehr geringen Baumaße anpassbar.

Weiterhin ist bei derartigen Verdecken die Herstellung als Modulteil erschwert, da zur Festlegung des Verdecks in einer Schließposition ein Gegenelement an der Karosserie vorgesehen werden muss, an das das Verdeck angepasst werden muss.

Die DE 37 09 927 A1 beschreibt ein Klappverdeck für einen Personenwagen, welches eine Arretiereinrichtung zur Festlegung des Klappverdecks in abgelegter Position aufweist. Die Arretiereinrichtung weist ein an einem Dachrahmenlenker angeordnetes Aufnahmeteil auf, welches zum Zusammenwirken mit einem an einem seitlichen Längsholm angeordneten Rastglied vorgesehen ist. Mittels der Arretiereinrichtung ist das Klappverdeck in abgelegter Position innerhalb des Klappverdecks fixierbar.

In der DE 103 13 496 A1 ist ein Faltverdeck eines Kraftfahrzeugs beschrieben, welches in abgelegter Position in sich selbst verriegelbar ist. Hierzu ist an einem Hauptlager ein einen Riegelhaken und einen Riegelhebel aufweisender Riegel einer Verriegelungs- oder Arretiereinrichtung vorgesehen, welcher mit einem an einem mittleren Rahmenteil vorgesehenen Riegelhaken in Eingriff bringbar ist.

Es ist somit Aufgabe der vorliegenden Erfindung, ein Verdeck für ein Kraftfahrzeug, insbesondere Cabriolet-Fahrzeug, nach der eingangs genannten Art zu schaffen, bei dem eine sichere Arretierung des Verdecks in geschlossenem und geöffnetem Zustand des Verdecks auf konstruktiv möglichst einfache Weise erfolgt und welches mit einem sehr geringen Aufwand an unterschiedliche Fahrzeugmodellen anpassbar ist.

Diese Aufgabe wird bei einem Verdeck für ein Kraftfahrzeug, insbesondere Cabriolet-Fahrzeug, der eingangs genannten Art mit den Merkmalen des kennzeichnenden Teils des Patentanspruches 1 gelöst.

Die Erfindung sieht ein Verdeck für ein Kraftfahrzeug, insbesondere Cabriolet-Fahrzeug, mit einem beispielsweise als Soft-Top oder als Hard-Top ausgebildeten, faltbaren Dach vor, welches mittels eines Verdeckgestänges zwischen einer Schließstellung, in der es an einem Windschutzscheibenrahmen festlegbar ist, und einer Öffnungsstellung, in der es in einer heckseitigen Ablageposition abgelegt ist, verlagerbar ist, wobei zur Festlegung an dem Windschutzscheibenrahmen in Schließstellung eine Verriegelungsvorrichtung mit einem Antriebsorgan und wenigstens einem hiermit über ein Gestänge verbundenen Verriegelungshaken vorgesehen ist, und wobei zur Arretierung des Dachs in der heckseitigen Ablageposition eine Arretiervorrichtung vorgesehen ist. Erfindungsgemäß ist dabei die Arretiervorrichtung mit wenigstens einem Arretierhaken und einem an dem Verdeckgestänge gelagerten Gegenlager, mit dem der Arretierhaken in Eingriff bringbar ist, ausgebildet.

Bei einer erfindungsgemäßen Lösung ist es in vorteilhafter Weise möglich, das konstruktiv sehr einfach ausgebildete Verdeck in Ablageposition unabhängig von einer karosseriefesten Befestigung festzulegen, wodurch eine hohe Flexibilität bei der Verwendung des Verdecks bei unterschiedlichen Fahrzeugmodellen erreicht wird. Zur Anpassung an unterschiedliche Fahrzeugmodelle ist bei dem erfindungsgemäßen Verdeck somit nur ein geringer Aufwand nötig.

Da der Arretierhaken der Arretiervorrichtung mittels des Gestänges der Verriegelungsvorrichtung von einem Antriebsorgan betätigbar ist, welcher insbesondere in einem in Verdeckschließstellung an dem Windschutzscheibenrahmen angeordneten mittleren Bereich des Verdecks angeordnet ist, kann in vorteilhafter Weise sowohl die Verriegelung des Daches in einer Schließstellung des Verdecks mit dem Verriegelungshaken, als auch die Verrieglung des Verdecks in einer Öffnungsstellung mit einem einzigen Antriebsorgan realisiert werden.

Wenn der Arretierhaken in Ablageposition des Verdecks mit einem mit dem Verdeckgestänge verbundenen Hebel in dem Gegenlager festlegbar ist, wobei ein bolzenartiges Element des Arretierhakens in eine Ausnehmung des Hebels, welche insbesondere als Bohrung oder als Nut ausgebildet ist, eingreift und diesen in dem Gegenlager festlegt, ist ein einfacher Mechanismus realisiert, mit welchem das Verdeck in Ablageposition in einer gesicherten Lage festlegbar ist.

Im Bereich der Dachmechanik ist kaum Bauraum für eine karosseriefeste Verriegelungseinrichtung eines vorderen Dachsegments vorhanden ist. Durch die Integration eines in der Dachmechanik vorhandenen Hebels in den Verriegelungsmechanismus kann die Anzahl der Bauteile und Befestigungselemente vorteilhafterweise reduziert und somit auch Bauraum eingespart werden. Weiterhin ergibt sich dabei durch eine reduzierte Toleranzkette ein verminderter Montage- und Einstellaufwand des Verdecks beim Einbau in ein Kraftfahrzeug, wodurch in vorteilhafter Weise eine Kostenreduktion gegenüber herkömmlichen Verdecken erreicht werden kann.

In einer konstruktiv einfachen Ausgestaltung der Erfindung kann es vorgesehen sein, dass der Hebel wenigstens annähernd L-förmig ausgebildet ist, wobei ein erster L-Schenkel des Hebels mit der Ausnehmung an seinem freien Ende in Ablageposition wenigstens annähernd senkrecht angeordnet ist, und wobei ein freies Ende eines zweiten L-Schenkels des Hebels und ein Schnittpunktbereich der L-Schenkel des Hebels mit dem Verdeckgestänge verbunden sind.

Der Einsatz eines separaten Antriebs für das Aufnahmeelement kann entfallen, wenn das Gegenlager als ein mit dem Verdeck verbundenes Aufnahmeelement ausgebildet ist, wobei das Aufnahmeelement in Ablageposition mittels einer Verdeckkinematik in eine Position verlagerbar ist, in der der Arretierhaken und der Hebel mit dem Aufnahmeelement in Eingriff bringbar sind.

Wenn der Arretierhaken mittels einer von dem Antriebsorgan betätigbaren Koppelstange betätigbar ist, welche wenigstens annähernd an ein in Verdeckquerrichtung verlaufendes, den Verriegelungshaken antreibendes Gestänge angekoppelt ist, kann die Arretiervorrichtung gegenüber herkömmlichen Verdecken in einen einer Fahrzeugseite zugewandten Bereich verlagert werden, wodurch mehr Platz beispielsweise für die Schaffung einer mobilen Hutablage geschaffen werden kann.

Hierzu ist es vorteilhaft, wenn die Koppelstange im Wesentlichen koaxial zu einer Treibstange des Gestänges, mit der der Verschlusshaken gelenkig verbunden ist, angeordnet ist.

In einer weiteren Ausgestaltung der Erfindung kann es vorgesehen sein, dass an dem Arretierhaken eine Verbindungsstange angelenkt ist, die an ihrem dem Arretierhaken abgewandten Ende ein Verriegelungselement aufweist, mittels dem zwei Dachteile miteinander verbindbar sind. Somit können in vorteilhafter Weise bei entsprechender Gestaltung sämtliche Verschlüsse von Dachteilen über das insbesondere als Mittenantrieb ausgebildete Antriebsorgan angesteuert werden.

In einer alternativen Ausgestaltung der Erfindung kann das Verdeck manuell über ein entsprechend ausgebildetes Antriebsorgan betätigt werden.

Weitere Vorteile und vorteilhafte Ausführungen eines Verdecks nach der Erfindung ergeben sich aus den Patentansprüchen, den Zeichnungen und der Beschreibung.

Nachfolgend ist ein vorteilhaftes Ausführungsbeispiel anhand der Zeichnung prinzipmäßig beschrieben.

Es zeigt:
- Fig. 1: eine prinzipmäßige Darstellung eines Verdecks eines Cabriolet-Fahrzeugs in einer Schließstellung;
- Fig. 2: eine prinzipmäßige Darstellung des Verdecks der Fig. 1, wobei das Verdeck in einer Öffnungsstellung dargestellt ist;
- Fig. 3: eine vereinfachte Darstellung eines Antriebsmechanismus des Verdecks der Fig. 1 mit einem in Alleinstellung dargestellten Hebel;
- Fig. 4: eine vereinfachte dreidimensionale Darstellung des Antriebsmechanismus mit dem Hebel der Fig. 3 in einem Zustand kurz vor Erreichen der Schließstellung des Verdecks mit einer nicht arretierten Arretiervorrichtung;
- Fig. 5: eine vereinfachte dreidimensionale Darstellung des Antriebsmechanismus mit dem Hebel der Fig. 3 und Fig. 4 im Zustand der Schließstellung des Verdecks mit nicht arretierter Arretiervorrichtung; und
- Fig. 6: eine vereinfachte dreidimensionale Darstellung des Antriebsmechanismus mit dem Hebel der Fig. 3 bis Fig. 5 in einem Zustand der Schließstellung des Verdecks, wobei die Arretiervorrichtung in einem arretierten Zustand dargestellt ist.

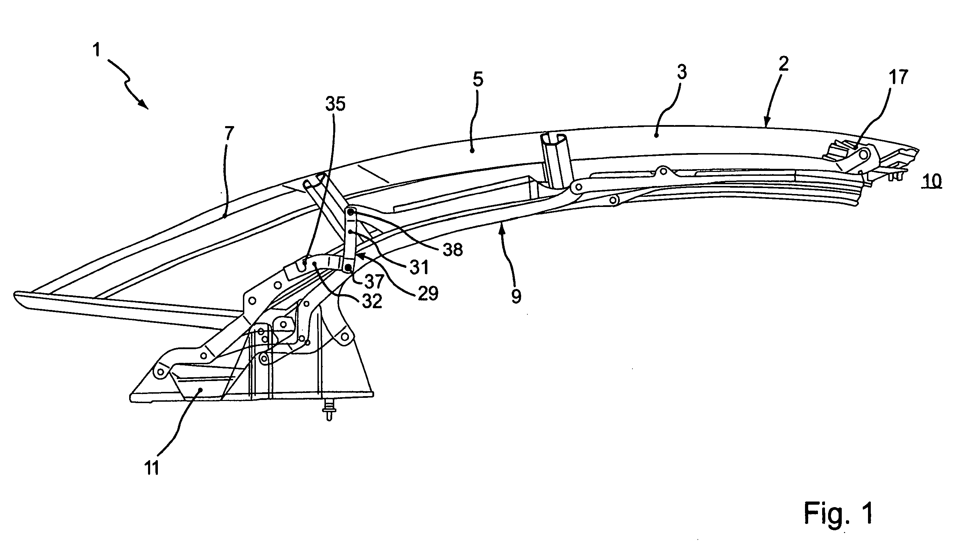

In Fig. 1 ist ein ein faltbares Dach 2 aufweisendes, als Hard-Top-Verdeck ausgebildetes Verdeck 1 eines Cabriolet-Fahrzeugs gezeigt, welches in einer Schließstellung dargestellt ist.

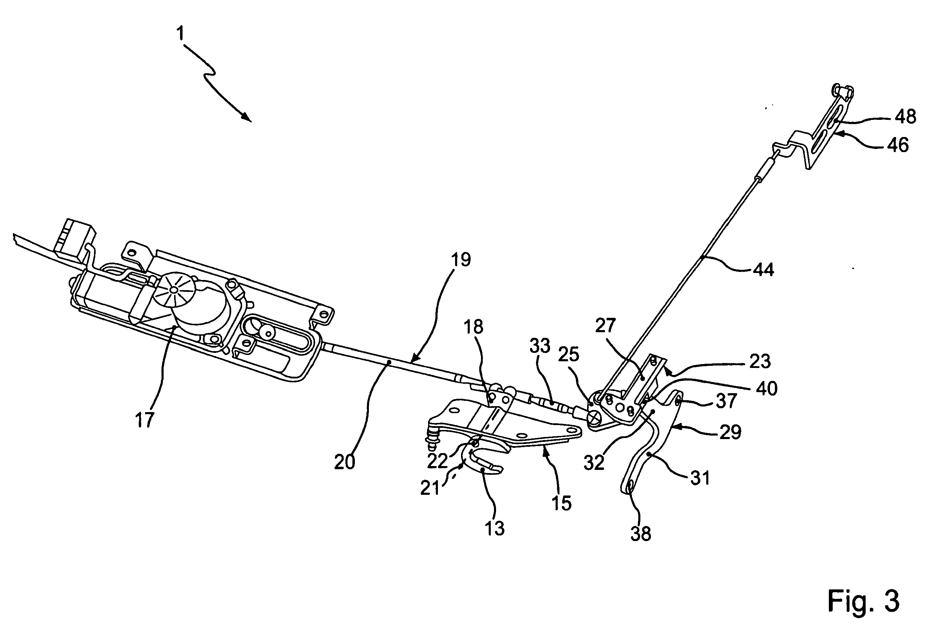

Das Verdeck 1 ist mit drei Dachsegmenten 3, 5, 7 ausgebildet, wobei das vordere Dachsegment 3 in einer Schließstellung des Verdecks 1 an einem nur hinsichtlich seiner Lage angedeuteten Windschutzscheibenrahmen 10 mittels einem in der Fig. 3 ersichtlichen Verschlusshaken 13 einer Verriegelungsvorrichtung 15 festlegbar ist.

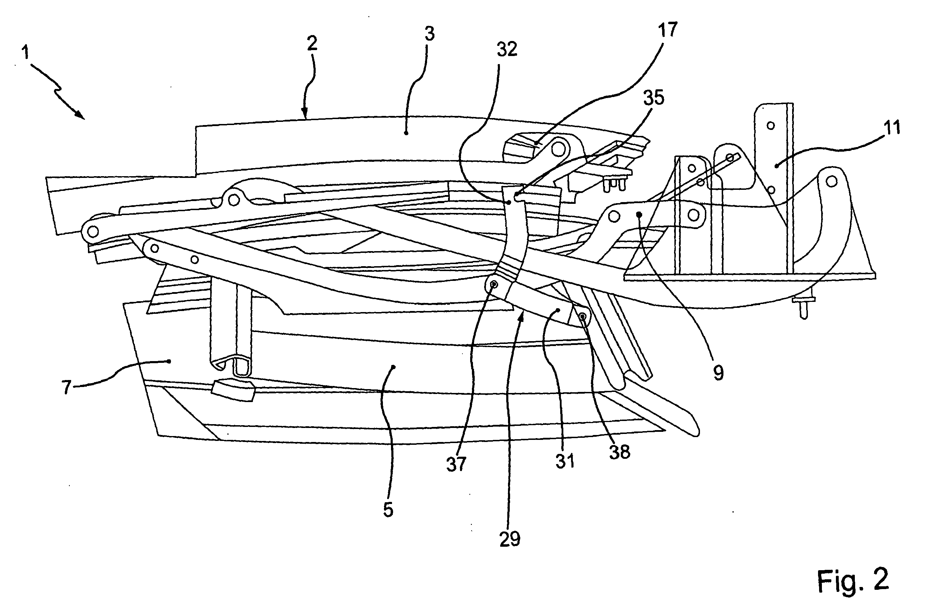

Mittels eines Verdeckgestänges 9, welches in einem heckseitigen Bereich des Verdecks 1 an einem zum Befestigen des Verdecks 1 an einer Karosserie des Cabriolet-Fahrzeugs vorgesehenen Befestigungselement 11 angelenkt ist, kann das Verdeck 1 aus einer in der Fig. 1 dargestellten Schließstellung in eine in der Fig. 2 dargestellte Öffnungsstellung des Verdecks 1, in der das Verdeck 1 in einer heckseitigen Ablageposition abgelegt ist und von der Schließstellung des Verdecks 1 in die Öffnungsstellung des Verdecks 1, überführt werden.

Die im Folgenden verwendeten Begriffe unten, oben, hinten, vorne und mittig beziehen sich jeweils auf das Verdeck 1 des Cabriolet-Fahrzeugs in einem Einbauzustand.

Der Verschlusshaken 13 der an dem Verdeck 1 festgelegten Verriegelungsvorrichtung 15 zur Festlegung des vorderen Dachsegments 3 an dem Windschutzscheibenrahmen 10 in Schließstellung des Verdecks 1 ist von einem als Mittenantrieb 17 ausgebildeten Antriebsorgan, welcher in einem vorderen mittigen Bereich des vorderen Dachsegments 3 angeordnet ist, betätigbar.

Hierzu ist eine Treibstange 20 des Gestänges 19 an ihrem dem Mittenantrieb 17 abgewandten Ende mit einem dreieckförmigen Gelenkhebel 18 verbunden, wobei der Gelenkhebel 18 über einen Bolzen 22 drehbar an der Verriegelungsvorrichtung 15 festgelegt ist. Der Bolzen 22 ist mit seinem dem Gelenkhebel 18 abgewandten Ende mit dem Verschlusshaken 13 drehfest verbunden.

Zum Festlegen des Verschlusshakens 13 an dem Windschutzscheibenrahmen 10 kann der Mittenantrieb 17 die Treibstange 20 in Verdeckquerrichtung bewegen, so dass der Gelenkhebel 18 an der verdeckfesten Verriegelungsvorrichtung 15 verschwenkt wird. Hieraus resultiert eine Drehung des Bolzens 22, welcher wiederum den Verschlusshaken 13 verschwenkt und diesen in Verdeckschließstellung mit einem Gegenelement am Windschutzscheibenrahmen 10 in Eingriff bringt bzw. von dem Gegenelement am Windschutzscheibenrahmen 10 löst.

Zur Lagesicherung des Verdecks 1 in einer abgelegten Position ist eine Arretiervorrichtung 23 ausgebildet, welche ein an dem vorderen Dachsegment 3 festlegbares als Aufnahmeelement 27 ausgebildetes Gegenlager und einen an dem Aufnahmeelement 27 angelenkten Arretierhaken 25 aufweist. Das Aufnahmeelement 27 und der Arretierhaken 25 können dabei in einer Ablageposition des Verdecks 1 mit einem mit dem Verdeckgestänge 9 verbundenen L-förmigen Hebel 29 zusammenwirken.

Der Hebel 29, welcher in den Fig. 3 bis Fig. 6 ohne seine Ankopplung an das Verdeckgestänge 9 dargestellt ist, ist sowohl über eine sich in einem Schnittpunkt eines zweiten L-Schenkels 31 und eines ersten L-Schenkels 32 befindliche Bohrung 37 als auch über eine sich an einem von dem Schnittpunkt der L-Schenkel 31 und 32 abgewandtem Ende des zweiten L-Schenkels befindliche Bohrung 38 mit dem Verdeckgestänge 9 verbunden.

Bei einem Übergang des Verdecks 1 von einer Schließstellung in eine Öffnungsstellung wird der Hebel 29, welcher in der in der Fig. 1 dargestellten Schließstellung des Verdecks 1 mit dem zweiten L-Schenkel 31 nach oben und dem ersten L-Schenkel 32 nach hinten weist, von dem Verdeckgestänge 9 um etwa 270° entgegen dem Uhrzeigersinn gedreht, so dass der erste L-Schenkel 32 des Hebels 29 in einer in der Fig. 2 dargestellten Öffnungsstellung des Verdecks 1 wenigstens annähernd nach vorne und der erste L-Schenkel 32 des Hebels 29 nach oben weist.

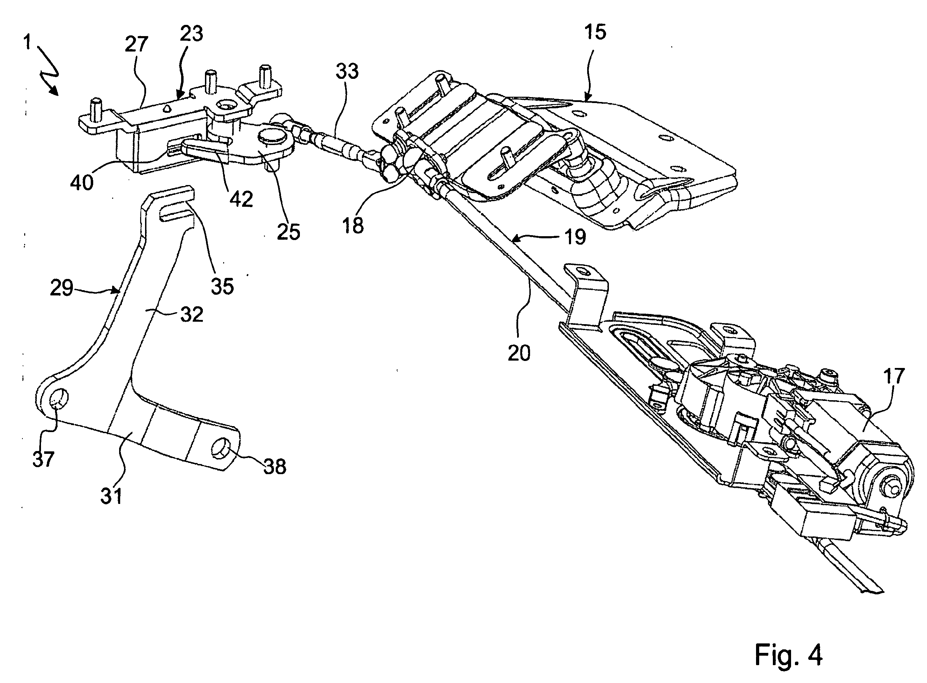

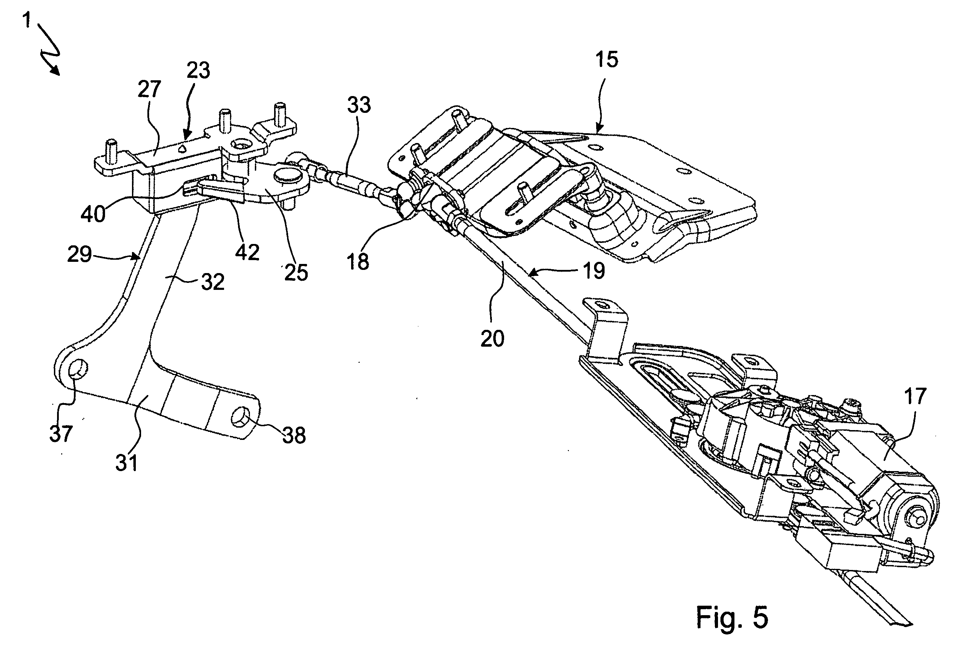

Der erste L-Schenkel 32 des Hebels 29, welcher an seinem dem Schnittpunkt der beiden L-Schenkel 31 und 32 des Hebels 29 abgewandten Ende eine Nut 35 aufweist, wird dabei in einer nach oben gerichteten Bewegung - wie in den Fig. 4 und Fig. 5 zu entnehmen ist - in eine nicht näher dargestellte untere Öffnung des Aufnahmeelements 27 eingeführt. Die Nut 35 des ersten L-Schenkels 32 ist dabei derart in der unteren Öffnung des Aufnahmeelements 27 angeordnet, dass ein Bereich des ersten L-Schenkels 32 in Öffnungsstellung des Verdecks 1 oberhalb einer zweiten, seitlichen Öffnung 40 des Aufnahmeelements 27 und ein Bereich des ersten L-Schenkels 32 unterhalb der zweiten Öffnung 40 des Aufnahmeelements 27 angeordnet ist.

Zur Festlegung des ersten L-Schenkels 32 des Hebels 29 in dem Aufnahmeelement 27 ist der Arretierhaken 25 mit einer Koppelstange 33 verbunden, welche an ihrem dem Arretierhaken 25 abgewandten Ende mit dem Gelenkhebel 18 verbunden ist. Durch eine von dem Mittenantrieb 17 ausgelösten Bewegung der Treibstange 20 des Gestänges 19 in Richtung des Mittenantriebs 17 wird der Gelenkhebel 18 um den Bolzen 22 gedreht und bewegt hierdurch die ebenfalls mit dem Gelenkhebel 18 verbundene Koppelstange 33 wenigstens annähernd in Verdeckquerrichtung.

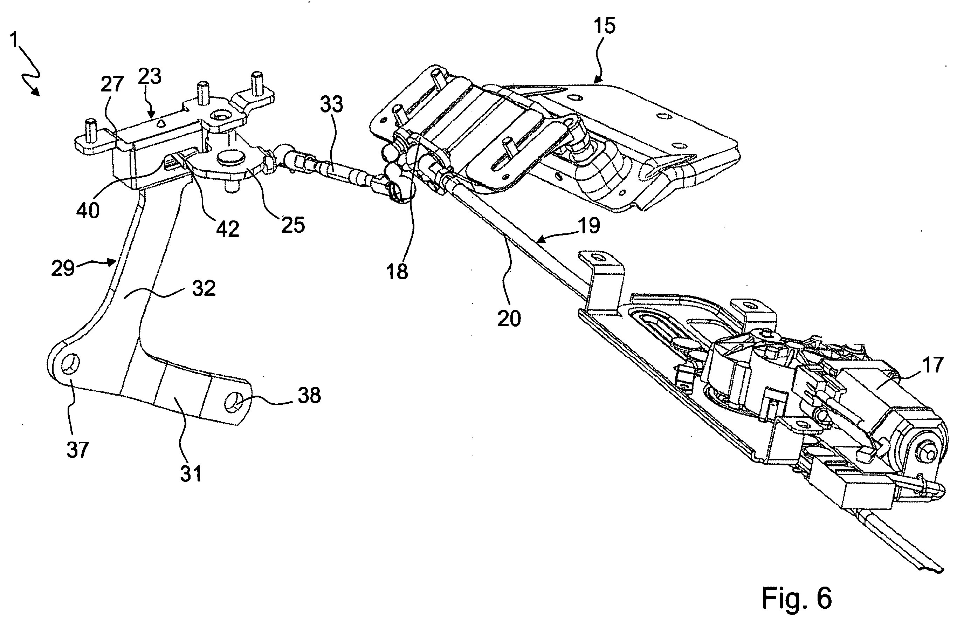

Mittels dieser translatorischen Bewegung der Koppelstange 33 wird der Arretierhaken 25 um seine gelenkige Verbindung mit dem verdeckfeste Aufnahmeelement 27 im Uhrzeigersinn gedreht, so dass ein bolzenartiges Element 42 des Arretierhakens 25, wie in der Fig. 6 gezeigt, in die seitliche Öffnung 40 des Aufnahmeelements 27 gedreht wird.

Der Hebel 29 kann bei dieser Stellung des Arretierhakens 25 nicht aus der unteren Öffnung des Aufnahmeelements 27 bewegt werden, da der sich oberhalb der seitlichen Öffnung 40 des Aufnahmeelements 27 befindliche Bereich des ersten L-Schenkels 32 des Hebels 29 von dem Element 42 des Arretierhakens 25 in dem Aufnahmeelement 27 gehalten wird.

Das Verdeck 1 wird somit durch das mit dem vorderen Dachsegment 3 verbundene Aufnahmeelement 27 und den über das Verdeckgestänge 9 mit dem vorderen Dachsegment 3 und dem mittleren Dachsegment 5 wirkverbundenen Hebel 29 in seiner Ablageposition gesichert, wobei der Hebel 29 in dieser Position vorteilhafterweise horizontale Kräfte über seine Verbindung mit dem Verdeckgestänge 9 aufnehmen kann.

Zum Lösen des Verdecks 1 aus der gesicherten Ablageposition wird die Treibstange 20 des Gestänges 19 von dem Mittenantrieb 17 in Richtung der Verriegelungsvorrichtung 15 bewegt. Hierdurch wird die Koppelstange 33 über eine Verschwenkung des Gelenkhebels 18 in eine dem Mittenantrieb 17 abgewandte Richtung bewegt und dreht dadurch den Arretierhaken 25 um seine Festlegung an dem Aufnahmeelement 27 entgegen dem Uhrzeigersinn aus dem Aufnahmeelement 27 heraus. Das Verdeck 1 kann somit von einer Öffnungsstellung in eine Schließstellung überführt werden, da der Hebel 29 nicht mehr in dem Aufnahmeelement 27 gehalten ist. Das mit dem Aufnahmeelement 27 verbundene vordere Dachsegment 3 bewegt sich hierbei nach oben von dem Hebel 29 weg.

In Fig. 3 ist weiterhin eine Verbindungsstange 44 dargestellt, welche an ihrem einen Ende an dem Arretierhaken 25 angelenkt ist und an ihrem anderen, dem Arretierhaken abgewandten Ende mit einem Verriegelungselement 46 verbunden ist.

Das Verriegelungselement 46 weist Langlöcher 48 zur Führung auf, welche in einer Schließstellung des Verdecks 1 mit Bolzen des Dachsegments 5 in Eingriff bringbar sind. Hierzu wird eine von dem Mittenantrieb 17 verursachte Drehung des Arretierhakens 25 in eine Bewegung der Verbindungsstange 44 umgesetzt, mittels welcher die Bolzen der anderen Dachelemente 3 bzw. 5 mit dem Verriegelungselement 46 verbindbar sind.

Die Verbindung der Dachsegmente 3, 5 kann somit in vorteilhafter Weise mittels des Mittenantriebs 17 realisiert werden.

## Patentansprüche

1. Verdeck für ein Kraftfahrzeug, insbesondere Cabriolet-Fahrzeug, mit einem faltbaren Dach (2), welches mittels eines Verdeckgestänges (9) zwischen einer Schließstellung, in der es an einem Windschutzscheibenrahmen (10) festlegbar ist, und einer Öffnungsstellung, in der es in einer heckseitigen Ablageposition abgelegt ist, verlagerbar ist, wobei zur Festlegung an dem Windschutzscheibenrahmen (10) in Schließstellung eine Verriegelungsvorrichtung (15) mit einem Antriebsorgan (17) und wenigstens einem hiermit über ein Gestänge (19) verbundenen Verschlusshaken (13) vorgesehen ist, und wobei zur Arretierung des Dachs (2) in der heckseitigen Ablageposition eine Arretiervorrichtung (23) vorgesehen ist,
**dadurch gekennzeichnet,**
**dass** die Arretiervorrichtung (23) mit wenigstens einem Arretierhaken (25) und einem an dem Verdeckgestänge (9) gelagerten Gegenlager (27), welches mit dem Arretierhaken (25) in Eingriff bringbar ist, ausgebildet ist, wobei der Arretierhaken (25) der Arretiervorrichtung (23) mittels des Gestänges (19) der Verriegelungsvorrichtung (15) von dem Antriebsorgan (17) betätigbar ist.

2. Verdeck für ein Kraftfahrzeug nach Anspruch 1,
**dadurch gekennzeichnet,**
**dass** der Arretierhaken (25) in der heckseitigen Ablageposition mit einem mit dem Verdeckgestänge (9) verbundenen Hebel (29) in dem Gegenlager (27) festlegbar ist.

3. Verdeck für ein Kraftfahrzeug nach Anspruch 2,
**dadurch gekennzeichnet,**
**dass** ein bolzenartiges Element (42) des Arretierhakens (25) in Ablageposition des Verdecks (1) in eine Öffnung des Hebels (29), welche insbesondere als Bohrung oder Nut (40) ausgebildet ist, eingreift und diesen in dem Gegenlager (27) festlegt.

4. Verdeck für ein Kraftfahrzeug nach Anspruch 3,
**dadurch gekennzeichnet,**
**dass** der Hebel (29) wenigstens annähernd L-förmig ausgebildet ist, wobei ein erster L-Schenkel (32) des Hebels (29) mit der Ausnehmung (35) an seinem freien Ende in Ablageposition wenigstens annähernd senkrecht angeordnet ist, und wobei ein freies Ende eines zweiten L-Schenkels (31) des Hebels (29) und ein Schnittpunktbereich der L-Schenkel (31, 32) des Hebels (29) mit dem Verdeckgestänge (9) verbunden sind.

5. Verdeck für ein Kraftfahrzeug nach einem der Ansprüche 2 bis 4,
**dadurch gekennzeichnet,**
**dass** das Gegenlager als ein mit dem Verdeck (1) verbundenes Aufnahmeelement (27) ausgebildet ist, wobei das Aufnahmeelement (27) in Ablageposition mittels einer Verdeckkinematik in eine Position verlagerbar ist, in der der Arretierhaken (25) und der Hebel (29) mit dem Aufnahmeelement (27) in Eingriff bringbar sind.

6. Verdeck für ein Kraftfahrzeug nach einem der Ansprüche 1 bis 5,
**dadurch gekennzeichnet,**
**dass** das Antriebsorgan (17) wenigstens annähernd mittig bezogen auf die Fahrzeugbreite an einem vorderen Ende des Verdecks (1) angeordnet ist.

7. Verdeck für ein Kraftfahrzeug nach Anspruch 6,
**dadurch gekennzeichnet,**
**dass** der Arretierhaken (25) mittels einer von dem Antriebsorgan (17) betätigbaren Koppelstange (33) betätigbar ist, welche an das wenigstens annähernd in Verdeckquerrichtung verlaufende, den Arretierhaken (25) antreibende Gestänge (19) angekoppelt ist.

8. Verdeck für ein Kraftfahrzeug nach Anspruch 7,
**dadurch gekennzeichnet,**
**dass** die Koppelstange (33) im Wesentlichen koaxial zu einer Treibstange (20) des Gestänges (19), mit der der Verschlusshaken (13) gelenkig verbunden ist, angeordnet ist.

9. Verdeck für ein Kraftfahrzeug nach einem der Ansprüche 1 bis 8,
**dadurch gekennzeichnet,**
**dass** an dem Arretierhaken (25) wenigstens eine in Fahrzeuglängsrichtung verlaufende Verbindungsstange (44) angelenkt ist, die an ihrem dem Arretierhaken (25) abgewandten Ende ein Verriegelungselement (46) aufweist, mittels dem Dachteile (3, 5, 7) des faltbaren Dachs (2) gegeneinander verriegelbar sind.

## Claims

1. Hood for a motor vehicle, in particular a convertible vehicle, with a foldable roof (2) which is displaceable by means of a hood linkage (9) between a closed position, in which it can be fixed to a windscreen frame (10), and an open position, in which it is stowed in a rearward stowage position, there being provided a latching device (15) with a drive element (17) for latching the roof (2) onto the windscreen frame (10) in the closed position and at least one closing hook (13) connected to said latching device (15) via a linkage (19), and wherein a locking device (23) is provided for locking the roof (2) in the stowed position at the rear of the vehicle,
**characterised in that**
the locking device (23) is provided with at least one locking hook (25) and a counter bearing (27) which is supported on the hood linkage (9) and can be brought into engagement with the locking hook (25), wherein the locking hook (25) of the locking device (23) can be actuated by the drive element (17) via the linkage (19) of the latching device (15).

2. Hood for a motor vehicle according to claim 1, **characterised in that** the locking hook (25) can be fixed in the counter bearing (27) in the rear stowage position by a lever (29) connected to the hood linkage (9).

3. Hood for a motor vehicle according to claim 2, **characterised in that**, in the stowed position of the hood (1), a bolt-type element (42) of the locking hook (25) engages with an opening of the lever (29), said opening being provided in particular as a bore or groove (40), and thus fixes the locking hook (25) in the counter bearing (27).

4. Hood for a motor vehicle according to claim 3, **characterised in that** the lever (29) is at least approximately L-shaped, with a first L-arm (32) of the lever (29) with the recess (35) at its free end being disposed at least approximately vertically in the stowed position, and a free end of a second L-arm (31) of the lever (29) and an intersecting area of the L-arms (31, 32) of the lever (29) being connected to the hood linkage (9).

5. Hood for a motor vehicle according to any one of claims 2 to 4, **characterised in that** the counter bearing is provided as a receiving element (27) connected to the hood (1), said receiving element (27) being displaceable by a hood kinematic linkage assembly, when the hood is in the stowed position, into a position in which the locking hook (25) and the lever (29) can be brought into engagement with the receiving element (27).

6. Hood for a motor vehicle according to any one of claims 1 to 5, **characterised in that** the drive element (17) is disposed at least approximately centrally, with respect to the vehicle width, on a front end of the hood (1).

7. Hood for a motor vehicle according to claim 6, **characterised in that** the locking hook (25) can be actuated by means of a coupling rod (33), which coupling rod (33) can be actuated by the drive element (17) and is coupled to the linkage (19) extending at least approximately in the transverse direction of the hood and driving the locking hook (25).

8. Hood for a motor vehicle according to claim 7, **characterised in that** the coupling rod (33) is arranged substantially coaxially with respect to a drive rod (20) of the linkage (19) to which the locking hook (13) is articulated.

9. Hood for a motor vehicle according to any one of claims 1 to 8, **characterised in that** at least one connecting rod (44) extending in the longitudinal direction of the vehicle is articulated to the locking hook (25), said connecting rod (44) comprising a locking element (46) at its end facing away from the locking hook (25), said locking element (46) allowing to lock the roof parts (3, 5, 7) of the foldable roof (2) with respect to each other.

## Revendications

1. Capote pour véhicule automobile, notamment pour un cabriolet, avec un toit pliable (2) qui est déplaçable au moyen d'une tringlerie de capote (9) entre une position de fermeture, dans laquelle le toit (2) peut être fixé sur un cadre de pare-brise (10), et une position d'ouverture, dans laquelle le toit (2) est déposé dans une position de dépose à l'arrière du véhicule, un dispositif de verrouillage (15) avec un élément d'entraînement (17) et au moins un crochet de fermeture (13) relié audit dispositif de verrouillage (15) par une tringlerie (19) étant prévu pour fixer le toit (2) au cadre de pare-brise (10) dans la position de fermeture, et un dispositif d'arrêt (23) étant prévu pour arrêter le toit (2) dans sa position de dépose à l'arrière du véhicule,
**caractérisé en ce que**
le dispositif d'arrêt (23) présente au moins un crochet d'arrêt (25) et un palier antagoniste (27) qui est supporté par la tringlerie de capote (9) et qui peut venir en prise avec le crochet d'arrêt (25), ledit crochet d'arrêt (25) du dispositif d'arrêt (23) pouvant être actionné par l'élément d'entraînement (17) au moyen de la tringlerie (19) du dispositif d'arrêt (15).

2. Capote pour véhicule automobile selon la revendication 1, **caractérisé en ce que** le crochet d'arrêt (25) peut être fixé dans le palier antagoniste (27) dans la position de dépose à l'arrière du véhicule par un levier (29) relié à la tringlerie de capote (9).

3. Capote pour véhicule automobile selon la revendication 2, **caractérisé en ce que**, dans la position de dépose de la capote (1), un élément sous forme d'un boulon (42) du crochet d'arrêt (25) vient en prise dans une aperture du levier (29), réalisée notamment sous forme d'un alésage ou d'une rainure (40), et fixe ainsi le crochet d'arrêt (25) dans ledit palier antagoniste (27).

4. Capote pour véhicule automobile selon la revendication 3, **caractérisé en ce que** le levier (29) présente approximativement la forme d'un L, un premier bras du L (32) du levier (29) avec l'évidement (35) à son extrémité libre étant disposé au moins approximativement verticalement dans la position de dépose, et une extrémité libre d'un deuxième bras du L (31) du levier (29) et une région d'intersection des bras du L (31, 32) du levier (29) étant reliées à la tringlerie de capote (9).

5. Capote pour véhicule automobile selon l'une quelconque des revendications 2 à 4, **caractérisé en ce que** le palier antagoniste se présente en tant qu'élément de réception (27) relié à la capote (1), ledit élément de réception (27) étant déplaçable par un mécanisme cinématique de capote, lorsque la capote se trouve dans sa position de dépose, vers une position dans laquelle le crochet d'arrêt (25) et le levier (29) peuvent s'engrener dans l'élément de réception (27).

6. Capote pour véhicule automobile selon l'une quelconque des revendications 1 à 5, **caractérisé en ce que** l'élément d'entraînement (17) est disposé au moins approximativement au milieu de la largeur du véhicule à une extrémité avant de la capote (1).

7. Capote pour véhicule automobile selon la revendication 6, **caractérisé en ce que** le crochet d'arrêt (25) peut être actionné au moyen d'une barre de couplage (33) qui peut être actionnée par l'élément d'entraînement (17) et est couplée à la tringlerie (19) s'étendant au moins approximativement dans la direction transversale de la capote et entraînant le crochet d'arrêt (25).

8. Capote pour véhicule automobile selon la revendication 7, **caractérisé en ce que** la barre de couplage (33) est disposée sensiblement coaxialement par rapport à une tige d'entraînement (20) de la tringlerie (19) à laquelle le crochet de fermeture (13) est articulée.

9. Capote pour véhicule automobile selon l'une quelconque des revendications 1 à 8, **caractérisé en ce qu'**au moins une barre de liaison (44) s'étendant dans la direction longitudinale du véhicule est articulée sur le crochet d'arrêt (25), ladite barre de liaison (44) comprenant un élément de verrouillage (46) à son extrémité détournée du crochet d'arrêt (25), ledit élément de verrouillage (46) permettant de verrouiller les éléments de toit (3, 5, 7) du toit pliable (2) les uns par rapport aux autres.
